# EUROPÄISCHE PATENTSCHRIFT

(11) **EP 3 157 772 B1**
(45) Veröffentlichungstag und Bekanntmachung des Hinweises auf die Patenterteilung: **24.01.2018**
(21) Anmeldenummer: 15730752.1
(22) Anmeldetag: 17.06.2015
(51) Int. Cl.: B60H 1/00

(54) **BEFESTIGUNGSANORDNUNG**
FASTENING ARRANGEMENT
SYSTÈME DE FIXATION

(30) Priorität: 18.06.2014 DE 102014211768
(43) Veröffentlichungstag der Anmeldung: 26.04.2017
(73) Patentinhaber: Mahle International GmbH, 70376 Stuttgart (DE)
(72) Erfinder: PHILIPPIN, Erich, 71254 Ditzingen (DE); SCHNEIDER, Ulrich, 74080 Heilbronn (DE)
(74) Vertreter: BRP Renaud & Partner mbB Rechtsanwälte Patentanwälte Steuerberater
(86) Internationale Anmeldenummer: PCT/EP2015/063626
(87) Internationale Veröffentlichungsnummer: WO 2015/193386

(56) Entgegenhaltungen:
- DE-T2- 69 608 650
- FR-A1- 2 728 653
- US-A1- 2013 340 982

## Beschreibung

Die vorliegende Erfindung betrifft eine Befestigungsanordnung zum Befestigen eines ersten Bauteils an einem zweiten Bauteil. Die Erfindung betrifft außerdem ein Kraftfahrzeug mit zumindest einer derartigen Befestigungsanordnung.

Aus der DE 103 25 502 A1 ist ein Motor, insbesondere ein Elektromotor zum Verstellen einzelner Kraftfahrzeugkomponenten mit entsprechend an dessen Motorgehäuse angeordneten Befestigungsmöglichkeiten bekannt, mit deren Hilfe der Motor mittels Schrauben an einem anderen Bauteil befestigt werden kann. Hierbei sind mehrere derartige Befestigungsmöglichkeiten am Motorgehäuse vorgesehen. Generell ist dabei eine eindeutige Festlegung des Motors am anderen Bauteil über drei Befestigungsschrauben möglich, so dass die vierte, nicht genutzte Befestigungsmöglichkeit eine erhöhte Flexibilität bieten soll. Bisher werden bei Klimaanlagen zur Steuerung von Funktionen Elektromotoren verwendet, die in aller Regel an ein Bauteil der Klimaanlage angeschraubt werden. Das Anschrauben erfolgt dabei üblicherweise über zwei Schrauben und zwei Haltedome oder mittels dreier solcher Schrauben. Ist jedoch ein zuverlässiges Befestigen eines derartigen Elektromotors an einem Bauteil der Klimaanlage bei gleichzeitig äußerst geringer zur Verfügung stehender Bauraumhöhe gefordert, führt die bisher aus dem Stand der Technik bekannte Befestigungsmethode nicht zum Erfolg. Aus der DE 696 08 650 T2 ist eine Befestigungsanordnung gemäß Oberbegriff des Anspruchs 1 bekannt. Die vorliegende Erfindung beschäftigt sich daher mit dem Problem, eine Befestigungsanordnung zum Befestigen eines ersten Bauteils an einem zweiten Bauteil anzugeben, aus welcher insbesondere eine reduzierte Bauhöhe erzielbar ist. Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, ein erstes Bauteil an einem zweiten Bauteil, beispielsweise ein Motorgehäuse eines Elektromotors zum Verstellen von Funktionselementen einer Klimaanlage an einem Gehäuse der Klimaanlage, über drei Befestigungspunkte zu befestigen, wobei einer dieser drei Befestigungspunkte als Clipsverbindung ausgebildet ist und die Fixierung an den beiden anderen Befestigungspunkten mittels eines erfindungsgemäßen Niederhalters bewerkstelligt wird, der über lediglich eine einzige Befestigungsschraube an einem erhöhten Einschraubdom am zweiten Bauteil fixiert wird. Durch die modifizierte, erfindungsgemäße Befestigungsanordnung kann eine hinsichtlich ihrer benötigten Bauraumhöhe deutlich reduzierte Befestigung erzielt werden, was insbesondere in modernen Motorräumen von großem Vorteil ist. Erfindungsgemäß sind dabei in einem unteren Bereich des ersten Bauteils zumindest drei Anschraublaschen mit entsprechenden Durchgangsöffnungen vorgesehen, wogegen am zweiten Bauteil eine der Anzahl der Durchgangsöffnung entsprechende Anzahl an Haltedomen vorgesehen ist, die bei miteinander montierten Bauteilen mit entsprechenden Fortsätzen in die jeweils zugehörigen Durchgangsöffnungen des ersten Bauteils eingreifen. Wenigstens einer der Haltedome weist darüber hinaus eine Deckelplatte auf, die ein seitliches Einschieben der zugehörigen Anschraublasche des ersten Bauteils und ein Verclipsen derselben zwischen dem Haltedom und der Deckelplatte ermöglicht. Unter dem Begriff "Deckelplatte" soll grundsätzlich auch eines oder mehrere Gehäuseteile verstanden werden können. Am zweiten Bauteil ist zudem ein im Vergleich zu den Haltedomen erhöhter Einschraubdom mit einer Einschrauböffnung für eine Befestigungsschraube vorgesehen, wobei der Niederhalter mit der Befestigungsschraube derart in der Einschrauböffnung fixierbar ist, dass er mit wenigstens einem seiner Arme eine zugehörige Anschraublasche des ersten Bauteils auf einen zugehörigen Haltedom des zweiten Bauteils niederdrückt und dadurch fixiert. Zur Befestigung des ersten Bauteils am zweiten Bauteil müssen nun nicht mehr wie bisher üblich drei Schraubverbindungen festgezogen werden, sondern lediglich eine einzige Schraubverbindung und die an der dritte Anschraublasche vorgesehenen Clipsverbindung, wodurch auch der Montagevorgang deutlich vereinfacht wird.

Bei einer vorteilhaften Weiterbildung der erfindungsgemäßen Lösung ist das erste Bauteil als Motorgehäuse und das zweite Bauteil als Klimaanlagengehäuse ausgebildet. Besonders zum Verstellen von Funktionselementen, wie beispielsweise Lüfterklappen oder Luftleitelementen, werden in modernden Kraftfahrzeugen Elektromotoren eingesetzt, die in entsprechender Weise befestigt werden müssen. Für die Befestigung eines derartigen Elektromotors über sein Motorgehäuse an einem Klimaanlagengehäuse kann die im vorherigen Absatz beschriebene, erfindungsgemäße Befestigungsanordnung genutzt werden.

Zweckmäßig ist der erfindungsgemäße Niederhalter als Kunststoffspritzgussteil ausgebildet. Eine Ausbildung des Niederhalters als Kunststoffspritzgussteil bietet einerseits eine vergleichsweise kostengünstige und einfache Herstellungsmöglichkeit des Niederhalters, insbesondere bei großen Stückzahlen, und erlaubt zudem andererseits eine nahezu beliebig wählbare Formgebung.

Bei einer weiteren vorteilhaften Ausführungsform der erfindungsgemäßen Lösung weist der Niederhalter an seinem wenigstens einem Arm einen Fortsatz auf, der bei montiertem Niederhalter in die zugehörige Durchgangsöffnung der Einschraublasche eingreift und diese dadurch fixiert. In montiertem Zustand greift somit der am Arm des Niederhalters angeordnete Fortsatz von oben in die Durchgangsöffnung der Anschraublasche und der Fortsatz des Haltedoms von unten, wodurch die Anschraublasche mit ihrer runden Durchgangsöffnung nicht nur in Axialrichtung, sondern auch in Radialrichtung zuverlässig fixiert werden kann.

Zweckmäßig weist der Niederhalter Führungselemente auf, über welche er gegenüber dem Einschraubdom am zweiten Bauteil geführt und gehalten werden kann. Derartige Führungselemente erleichtern insbesondere den Montagevorgang beim Befestigen des ersten Bauteils am zweiten Bauteil. Zugleich können derartige Führungselemente auch zum Aussteifen des Niederhalters verwendet werden, insbesondere sofern diese Verbindungen zu dem wenigstens einen Arm des Niederhalters herstellen und diesen dadurch aussteifen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine Explosionsdarstellung einer erfindungsgemäßen Befestigungsanordnung,
- Fig. 2: eine Draufsicht sowie unterschiedliche Schnittdarstellungen durch die erfindungsgemäße Befestigungsanordnung.

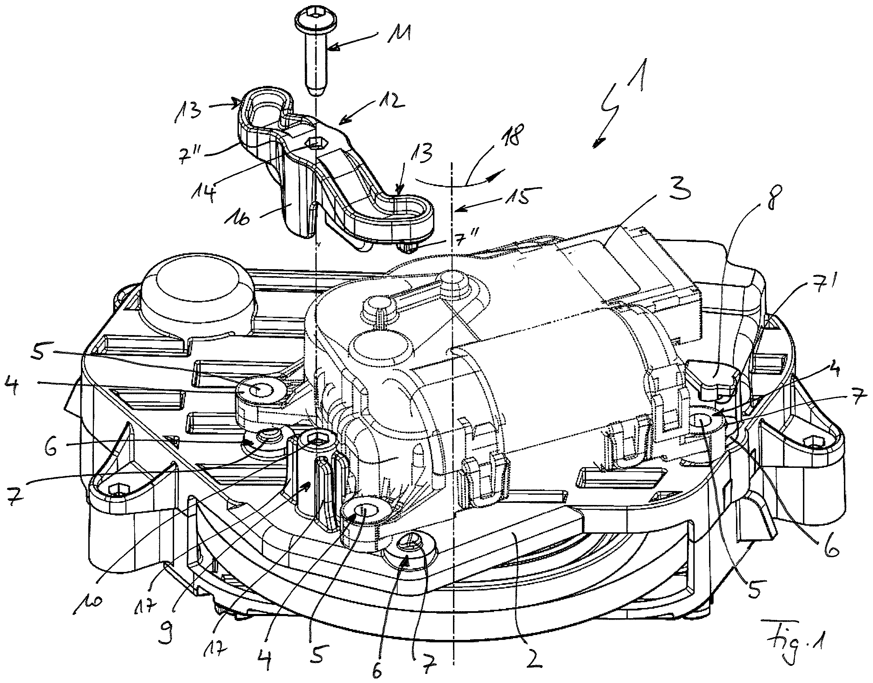

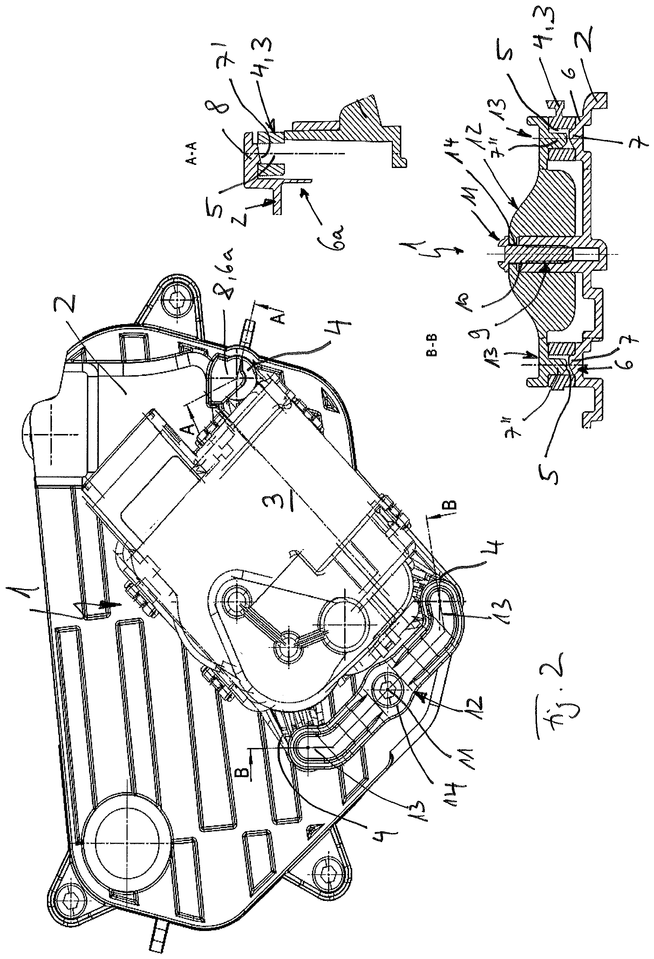

Entsprechend den Fig. 1 und 2, weist eine erfindungsgemäße Befestigungsanordnung 1 ein zweites Bauteil 2 sowie ein daran befestigbares erstes Bauteil 3 auf. Das erste Bauteil 3 kann beispielsweise als Motorgehäuse eines Elektromotors, insbesondere zum Verstellen von Funktionselementen einer Lüftungs- oder Klimaanlage eines Kraftfahrzeugs ausgebildet sein, wogegen das zweite Bauteil 2 als Klimaanlagengehäuse ausgebildet sein kann. In einem unteren Bereich des ersten Bauteils 3 sind dabei zumindest drei Anschraublaschen 4 mit Durchgangsöffnungen 5 vorgesehen, wogegen am zweiten Bauteil 2 eine der Anzahl der Durchgangsöffnungen 5 entsprechende Anzahl an Haltedomen 6 vorgesehen ist, die bei miteinander montierten Bauteilen 2, 3 mit entsprechenden Fortsätzen 7 in die jeweils zugehörigen Durchgangsöffnungen 5 des ersten Bauteils 3 eingreifen. Wenigstens einer der Haltedome 6, hier der Haltedom 6a, weist eine Deckelplatte 8 auf, die ein seitliches Einschieben der zugehörigen Anschraublasche 4 und ein Verclipsen derselben zwischen dem Haltedom 6a und der Deckelplatte 8 ermöglicht. Unter dem Begriff "Verclipsen" soll insbesondere die Möglichkeit verstanden werden, ein Dreh- oder Kippmoment abstützen zu können. Am zweiten Bauteil 2 ist darüber hinaus ein im Vergleich zu den Haltedomen 6 erhöhter Einschraubdom 9 mit einer Einschrauböffnung 10 für eine Befestigungsschraube 11 vorgesehen, über welche ein Niederhalter 12 mit zumindest einem Arm 13, hier sogar mit zwei Armen 13, am zweiten Bauteil 2 fixierbar ist. Der Niederhalter 12 selbst besitzt ebenfalls eine Durchgangsöffnung 14, durch welche die Befestigungsschraube 11 führbar und in die Einschrauböffnung 10 am Einschraubdom 9 des zweiten Bauteils 2 einschraubbar ist. Der Niederhalter 12 kann dabei mit der Befestigungsschraube 11 derart in der Einschrauböffnung 10 fixiert werden, dass er mit seinem wenigstens einen Arm 13, hier mit beiden Armen 13, jeweils eine zugehörige Anschraublasche 4 des ersten Bauteils 3 auf einem zugehörigen Haltedom 6 des zweiten Bauteils 4 fixiert. Zur Befestigung des zweiten Bauteils 3 am ersten Bauteil 2 ist somit lediglich noch eine einzige Befestigungsschraube 11 erforderlich, die in Verbindung mit der Clipsverbindung und dem Niederhalter 12 ein zuverlässiges und sicheres Fixieren des Bauteils 3 am zweiten Bauteil 2 ermöglicht, insbesondere ein Abstützen eines Dreh- oder Kippmoments.

Zum Fixieren des ersten Bauteils 3 am zweiten Bauteil 2 wird dieses zunächst auf das zweite Bauteil 2 aufgesetzt und um seine Achse 15, die beispielsweise einer Motorachse entsprechen kann, verdreht, bis die Anschraublasche 4 zwischen der Deckelplatte 8 und dem darunter angeordneten Haltedom 6 einrastet. In dieser Stellung greift ein Fortsatz 7', der unten an der Deckelplatte 8 angeordnet ist von oben in die Durchgangsöffnung 5 ein, wogegen ein Fortsatz 7, der am Haltedom 6 angeordnet ist, von unten in die Durchgangsöffnung 5 eingreift. Dies ist beispielsweise besonders deutlich im Schnitt A-A der Fig. 2 zu sehen. Hierdurch kann insbesondere eine Sicherung gegen ein unerwünschtes Verkippen und/oder Verdrehen erreicht werden, wobei auch hier wiederum gilt, dass die Deckelplatte zumindest ein Gehäuseteil sein kann. Ist diese Endstellung erreicht, greifen auch die an den anderen Haltedomen 6 angeordneten Fortsätze 7 von unten in die jeweils zugehörigen Durchgangsöffnungen 5 der zugehörigen Anschraublaschen 4 ein und Fixieren dadurch das erste Bauteil 3. Die Fortsätze 7, 7' sind dabei keilförmig ausgebildet und erlauben ein Einschieben der Anschraublaschen 4 in Drehrichtung 18, verhindern jedoch ein Herausrutschen der Anschraublaschen 4 entgegen der Drehrichtung 18. Anschließend kann der Niederhalter 12 auf den Einschraubdom 9 aufgesteckt und mittels der Befestigungsschraube 11 fixiert werden, wobei in diesem Fall die am Arm 13 des Niederhalters 12 angeordneten Fortsätze 7" von oben in die Durchgangsöffnung 5 der Anschraublaschen 4 eingreifen und diese dadurch fixieren, was besonders deutlich aus der Schnittdarstellung B-B gemäß der Fig. 2 zu sehen ist.

Generell kann der Niederhalter 12 als Kunststoffspritzgussteil ausgebildet sein und dadurch nicht nur kostengünstig, sondern bei entsprechender Ausgestaltung des Kunststoffspritzgusswerkzeugs auch entsprechend flexibel hergestellt werden.

Bei den Fig. 1 und 2 gezeigten Befestigungsanordnung 1 weist das erste Bauteil 3 insgesamt drei Anschraublaschen 4 auf, wobei selbstverständlich auch ein erstes Bauteil 3 mit vier Anschraublaschen 4 denkbar ist. Der Niederhalter 12 besitzt in den gezeigten Ausführungsformen zwei Arme 13 und an einem der Haltedome 6 ist eine Deckelplatte 8 angeordnet, die ein seitliches Einschieben der zugehörigen Anschraublasche 4 und ein Verclipsen derselben zwischen dem Haltedom 6 und der Deckelplatte 8, das heißt insbesondere ein Abstützen gegen ein Dreh- oder Kippmoment, ermöglicht. Um damit ein exaktes Aufsetzen des Niederhalters 12 auf dem Einschraubdom 9 erreichen zu können, weist der Niederhalter 12 Führungselemente 16 auf, über welche er gegenüber dem Einschraubdom 9 geführt und zugleich gehalten ist. Der Einschraubdom 9 kann durch seitliche Aussteifungsrippen 17 verstärkt sein.

Mit der erfindungsgemäßen Befestigungsanordnung 1 ist ein zuverlässiges und sicheres Fixieren des ersten Bauteils 3 am zweiten Bauteil 2 mit nur einer einzigen Befestigungsschraube 11 möglich, die über den erfindungsgemäß vorgesehenen Niederhalter 12 gleichzeitig zwei Anschraublaschen 4 des ersten Bauteils 3 am zweiten Bauteil 2 fixiert. Über die am Haltedom 6, an der Deckelplatte 8 und an den Armen 13 angeordneten Fortsätze 7, 7' und 7" kann ein zuverlässiges Fixieren der Anschraublaschen 4 im Bereich der Haltedome 6 erreicht werden. Von besonderer Bedeutung bei der erfindungsgemäßen Befestigungsanordnung 1 ist zudem, dass mit dieser eine besonders niedrige Bauhöhe erreicht werden kann. Die Fortsätze 7, 7' sind dabei als geschrägte Zapfen ausgebildet, die lediglich bei einem Eindrehen des ersten Bauteils 3 um dessen Achse 15 in Richtung 18, das heißt im vorliegenden Fall entgegen dem Uhrzeigersinn ein Verrasten erlauben, bei einer Demontage jedoch ein Lösen der jeweiligen Haltepunkte erforderlich machen, das heißt nicht ohne weiteres durch Rückverdrehen ausgerastet werden können.

## Patentansprüche

1. Befestigungsanordnung (1) zum Befestigen eines ersten Bauteils (3) an einem zweiten Bauteil (2) in einem Kraftfahrzeug, wobei
- in einem unteren Bereich des ersten Bauteils (3) zumindest drei Anschraublaschen (4) mit Durchgangsöffnungen (5) vorgesehen sind,
- am zweiten Bauteil (2) eine der Anzahl der Durchgangsöffnungen (5) entsprechende Anzahl an Haltedomen (6) vorgesehen ist, die bei miteinander montierten Bauteilen (3,2) mit entsprechenden Fortsätzen (7) in die jeweils zugehörigen Durchgangsöffnungen (5) des ersten Bauteils (3) eingreifen,
- wenigstens einer der Haltedome (6) eine Deckelplatte (8) aufweist, die ein seitliches Einschieben der zugehörigen Anschraublasche (4) und ein Verclipsen derselben zwischen dem Haltedom (6) und der Deckelplatte (8) ermöglicht,
**dadurch gekennzeichnet, dass**:
- am zweiten Bauteil (2) ein im Vergleich zu den Haltedomen (6) erhöhter Einschraubdom (9) mit einer Einschrauböffnung (10) für eine Befestigungsschraube (11) vorgesehen ist,
- ein Niederhalter (12) mit einer Durchgangsöffnung (14) und zumindest einem Arm (13) vorgesehen ist,
- der Niederhalter (12) mit der Befestigungsschraube (11) derart in der Einschrauböffnung (10) fixierbar ist, dass er mit seinem wenigstens einen Arm (4) eine zugehörige Anschraublasche (4) auf einem zugehörigen Haltedom (6) fixiert.

2. Befestigungsanordnung nach Anspruch 1,
**dadurch gekennzeichnet, dass**
das erste Bauteil (3) als Motorgehäuse und das zweite Bauteil (2) als Klimaanlagengehäuse ausgebildet ist.

3. Befestigungsanordnung nach Anspruch 1 oder 2,
**dadurch gekennzeichnet, dass**
der Niederhalter (12) als Kunststoffspritzgussteil ausgebildet ist.

4. Befestigungsanordnung nach einem der Ansprüche 1 bis 3,
**dadurch gekennzeichnet, dass**
- das erste Bauteil (3) drei Anschraublaschen (4) aufweist,
- ein zweiarmiger Niederhalter (12) vorgesehen ist,
- einer der Haltedome (6) eine Deckelplatte (8) aufweist, die ein seitliches Einschieben der zugehörigen Anschraublasche (4) und ein Verclipsen derselben zwischen dem Haltedom (6) und der Deckelplatte (8) ermöglicht.

5. Befestigungsanordnung nach einem der Ansprüche 1 bis 4,
**dadurch gekennzeichnet, dass**
der Niederhalter (12) an seinem wenigstens einen Arm (13) einen Fortsatz (7') aufweist, der bei montiertem Niederhalter (12) in die zugehörige Durchgangsöffnung (5) der Anschraublasche (4) eingreift und diese dadurch fixiert.

6. Befestigungsanordnung nach einem der Ansprüche 1 bis 5,
**dadurch gekennzeichnet, dass**
der Arm (13) einen Fortsatz (7") aufweist, der bei montiertem ersten Bauteil (3) in die zugehörige Durchgangsöffnung (5) der Anschraublasche (4) eingreift und diese dadurch fixiert.

7. Befestigungsanordnung nach einem der Ansprüche 1 bis 6,
**dadurch gekennzeichnet, dass**
der Niederhalter (12) Führungselemente (16) aufweist, über welche er gegenüber dem Einschraubdom (9) geführt und gehalten ist.

8. Kraftfahrzeug mit einer Befestigungsanordnung (1) nach einem der Ansprüche 1 bis 7.

## Claims

1. Fastening arrangement (1) for fastening a first component (3) to a second component (2), wherein
- in a lower region of the first component (3) at least three mounting brackets (4) with through openings (5) are provided,
- on the second component (2) a number of holding domes (6) corresponding to the number of through openings (5) are provided, which when the components (3, 2) are joined together engage with corresponding extensions (7) in the respectively associated through openings (5) of the first component (3),
- at least one of the retaining domes (6) has a cover plate (8) that permits a lateral insertion of the associated mounting bracket (4) and a clip-type engagement of the latter between the holding dome (6) and the cover plate (8),
**characterised in that**
- on the second component (2) a screw-in dome (9) with a screw-in opening (10) for a fastening screw (11), which is raised with respect to the retaining domes (6), is provided
- a hold-down device (12) with a through opening (14) and at least one arm (13) is provided,
- the hold-down device (12) can be fixed with the fastening screw (11) in the screw-in opening (10) in such a way that with its at least one arm (4) it fixes an associated mounting bracket (4) on an associated holding dome (6).

2. Fastening arrangement according to claim 1,
**characterised in that**
the first component (3) is formed as a motor housing and the second component (2) is formed as an air-conditioning housing.

3. Fastening arrangement according to claim 1 or 2,
**characterised in that**
the hold-down device (12) is designed as a plastic injection-moulded part.

4. Fastening arrangement according to any one of claims 1 to 3,
**characterised in that**
- the first component (3) has three mounting brackets (4),
- a double-arm hold-down device (12) is provided,
- one of the retaining domes (6) has a cover plate (8), which allows a lateral insertion of the associated mounting bracket (4) and a clip-type engagement of the latter between the holding dome (6) and the cover plate (8).

5. Fastening arrangement according to any one of claims 1 to 4, **characterised in that**
the hold-down device (12) has on its at least one arm (13) an extension (7'), which when the hold-down device (12) is installed engages in the associated through opening (5) of the mounting bracket (4) and thereby fixes the latter.

6. Fastening arrangement according to any one of claims 1 to 5,
**characterised in that**
the arm (13) has an extension (7"), which when the first component (3) is installed engages in the associated through opening (5) of the mounting bracket (4) and thereby fixes the latter.

7. Fastening arrangement according to any one of claims 1 to 6,
**characterised in that**
the hold-down device (12) has guide elements (16), by means of which it is guided over the screw-in dome (9) and held.

8. Motor vehicle with a fastening arrangement (1) according to any one of claims 1 to 7.

## Revendications

1. Système de fixation (1) pour la fixation d'un premier composant (3) à un deuxième composant (2) dans un véhicule automobile, dans lequel
- au moins trois pattes à visser (4) avec des ouvertures de passage (5) sont prévues dans une zone inférieure du premier composant (3),
- un nombre de dômes de retenue (6) correspondant au nombre d'ouvertures de passage (5) est prévu au niveau du deuxième composant (2), lesquels entrent en prise dans le cas de composants (3, 2) montés les uns avec les autres avec des prolongements (7) correspondants dans les ouvertures de passage (5) respectivement correspondantes du premier composant (3),
- au moins un des dômes de retenue (6) présente une plaque de couvercle (8), qui permet une insertion latérale de la patte à visser (4) correspondante et son clipsage entre le dôme de retenue (6) et la plaque de couvercle (8),
**caractérisé en ce que** :
- un dôme de vissage (9) plus haut que les dômes de retenue (6) avec une ouverture de vissage (10) pour une vis de fixation (11) est prévu au niveau du deuxième composant (2),
- un serre-flanc (12) avec une ouverture de passage (14) et au moins un bras (13) est prévu,
- le serre-flanc (12) peut être fixé avec la vis de fixation (11) dans l'ouverture de vissage (10) de telle manière qu'il fixe avec son au moins un bras (4) une patte à visser (4) correspondante sur un dôme de retenue (6) correspondant.

2. Système de fixation selon la revendication 1,
**caractérisé en ce que**
le premier composant (3) est réalisé en tant que carter de moteur et le deuxième composant (2) en tant que carter de système de climatisation.

3. Système de fixation selon la revendication 1 ou 2,
**caractérisé en ce que**
le serre-flanc (12) est réalisé en tant que pièce coulée par injection de plastique.

4. Système de fixation selon l'une quelconque des revendications 1 à 3,
**caractérisé en ce que**
- le premier composant (3) présente trois pattes à visser (4),
- un serre-flanc à deux bras (12) est prévu,
- un des dômes de retenue (6) présente une plaque de couvercle (8), qui permet une insertion latérale de la patte à visser (4) correspondante et son clipsage entre le dôme de retenue (6) et la plaque de couvercle (8).

5. Système de fixation selon l'une quelconque des revendications 1 à 4,
**caractérisé en ce que**
le serre-flanc (12) présente au niveau de son au moins un bras (13) un prolongement (7'), qui entre en prise dans l'ouverture de passage (5) correspondante de la patte à visser (4) lorsque le serre-flanc (12) est monté et la fixe ainsi.

6. Système de fixation selon l'une quelconque des revendications 1 à 5,
**caractérisé en ce que**
le bras (13) présente un prolongement (7"), qui entre en prise dans l'ouverture de passage (5) correspondante de la patte à visser (4) lorsque le premier composant (3) est monté et la fixe ainsi.

7. Système de fixation selon l'une quelconque des revendications 1 à 6,
**caractérisé en ce que**
le serre-flanc (12) présente des éléments de guidage (16), via lesquels il est guidé et retenu par rapport au dôme de vissage (9).

8. Véhicule automobile avec un système de fixation (1) selon l'une quelconque des revendications 1 à 7.
